# EUROPÄISCHE PATENTSCHRIFT

(11) **EP 1 042 121 B1**
(45) Veröffentlichungstag und Bekanntmachung des Hinweises auf die Patenterteilung: **05.11.2003**
(21) Anmeldenummer: 98965127.8
(22) Anmeldetag: 17.12.1998
(51) Int. Cl.: B32B 17/10, C08J 5/18, C08K 3/36, C08L 29/14

(54) **WEICHMACHERHALTIGE FOLIE AUS TEILACETALISIERTEN POLYVINYLALKOHOLEN**
PARTIALLY ACETALISED POLYVINYL ALCOHOL PLASTICISED SHEETING
FEUILLE PLASTIFIEE CONSTITUEE D'ALCOOLS POLYVINYLIQUES PARTIELLEMENT ACETALISES

(30) Priorität: 18.12.1997 DE 19756274
(43) Veröffentlichungstag der Anmeldung: 11.10.2000
(73) Patentinhaber: HT TROPLAST AG, 53840 Troisdorf (DE)
(72) Erfinder: HOSS, Manfred, D-53844 Troisdorf (DE); KOLL, Berhard, D-53757 St. Augustin (DE)
(86) Internationale Anmeldenummer: DE9803703
(87) Internationale Veröffentlichungsnummer: WO99032283

(56) Entgegenhaltungen:
- EP-A- 0 227 633
- EP-A- 0 617 078
- DE-A- 2 410 153

## Beschreibung

### Technisches Gebiet

Die Erfindung betrifft weichmacherhaltige Folie aus teilacetalisierten Polyvinylalkoholen als Zwischenschicht in Verbundsicherheitsgläsern.

Verbundsicherheitsscheiben, bestehend aus zwei Glasscheiben und einer die Glasscheiben verbindenden Klebefolie aus teilacetalisierten Polyvinylalkoholen, vorzugsweise aus Polyvinylbutyral (PVB), werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat oder Polyester, ersetzt sein kann. Auch auf dem Bausektor, z. B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z. B. als Verbundpanzergläser, auch Mehrfachverbunde, also Verbunde, die aus mehr als zwei tragenden Schichten bestehen, eingesetzt werden.

Während Verbundsicherheitsscheiben für den Baubereich i.a. eine möglichst hohe Haftung zwischen Glas und Klebefolie aufweisen sollen, wird für Verbundsicherheitsscheiben für Kraftfahrzeuge eine definierte, nicht zu hohe Haftung angestrebt.

### Stand der Technik

Es ist bekannt, daß die Glashaftung der Folien durch Zusatz verschiedener Alkali- oder Erdalkaliverbindungen, beispielsweise in Form von Hydroxiden, Salzen, Komplexen, reduziert wird (DE 15 96 902 B, DE 15 96 894 B, US 3,249,488 A, US 3,249,489A, US 3,262,835 A, US 3,262,836 A).

Ein Nachteil dieser alkalisch reagierenden Verbindungen liegt in einer chemischen Veränderung des plastifizierten Polyvinylbutyralharzes, was sich in Verfärbungen infolge einer Schädigung des Polyvinylbutyral/Weichmacher-Systems und in Trübungen des resultierenden Verbundsicherheitsglases infolge unbefriedigender Feuchtigkeitsbeständigkeit äußert. Verfärbungen und Trübungen beeinträchtigen die Transparenz des Verbundsicherheitsglases. Darüber hinaus ändern sich durch die Alkalität als weitere Folge molekulare Größen wie Molmasse und -verteilung des Polymeren sowie die Alterungsbeständigkeit. Bei einer Randauffeuchtung der Folie wird die Haftung reduziert, es treten Ablösungen der Folie vom Glas ein.

Aus der DE 24 10 153 C3 ist ein Verfahren zur Einstellung der Haftkraft von weichmacherhaltigen teilacetalisierten Polyvinylalkoholen mit siliciumfunktionellen und silicium-organofunktionellen Silanen bekannt, wobei die siliciumfunktionellen Silane die Haftung mindern und die silicium-organofunktionellen Silane die Haftung erhöhen.

Der Zusatz von Silanverbindungen führt jedoch je nach den Prozeßbedingungen zu gelegentlicher, schwer zu kontrollierender örtlicher Vernetzung des eingesetzten Harzes und dadurch zu sichtbarer Knötchenbildung.

Aus der EP 0 227 633 A2 ist eine Zwischenschicht für Verbundsicherheitsgläser mit erhöhter Feuerbeständigkeit bekannt, bei der Additive wie organische Phosphate und Phosphite zur Verbesserung der Feuerbeständigkeit zusammen mit Nukleinierungs-Zusätzen wie Silica-Fume in größeren Mengen zugesetzt werden. Ein positiver Einfluß von geringen Mengen an amorphem Siliciumdioxid auf die Haftung der Zwischenschicht am Glas wird in dieser Schrift nicht offenbart.

### Aufgabe

Aufgabe der vorliegenden Erfindung ist es, eine weichmacherhaltige Folie aus teilacetalisierten Polyvinylalkoholen sowie ein Verfahren zu deren Herstellung zur Verfügung zu stellen, die sich als Zwischenschicht in Verbundsicherheitsgläsern eignet und die oben genannten Nachteile nicht aufweist.

### Darstellung der Erfindung

Die Erfindung löst diese Aufgabe durch eine weichmacherhaltige Folie gemäß Anspruch 1 bzw. ein Verfahren gemäß Anspruch 6 bzw. 7, bevorzugt in Verbindung mit einem oder mehreren der Merkmale der Unteransprüche.

Überraschenderweise hat sich herausgestellt, daß bereits der Zusatz geringer Mengen an amorphem Siliciumdioxid zu einer erheblichen Steigerung der Haftung zwischen einer Folie aus teilacetalisierten Polyvinylalkoholen und einer Silikatglasscheibe führt.

Amorphes Siliciumdioxid wird großtechnisch als FällungsKieselsäure aus einer wäßrigen Alkalisilikat-Lösung durch Fällen mit Mineralsäuren oder als Flammen-hydrolytisch erzeugte pyrogene Kieselsäure hergestellt (s. Römpp-Chemie-Lexikon, 9. Auflage, Band 3, Seite 2236). Für die vorliegende Erfindung haben sich pyrogene Kieselsäuren als besonders geeignet herausgestellt.

Das amorphe Siliciumdioxid wird in Mengen von 0,001 bis 0,25 Gew.-%, bevorzugt von 0,01 bis 0,25 Gew.-%, jeweils bezogen auf die Masse der Folie, eingesetzt. Bei Einsatz größerer Mengen an amorphem Siliciumdioxid besteht die Gefahr einer Trübung der Folie, so daß eine Verwendung von Folien mit höheren Gehalten an amorphem Siliciumdioxid als Zwischenschicht in Verbundsicherheitsgläsern in der Regel ausscheidet.

Es hat sich als besonders vorteilhaft erwiesen, den Zusatz an amorphem Siliciumdioxid zunächst im verwendeten Weichmacher zu dispergieren. Die Herstellung der teilacetalisierten Polyvinylalkohol-Folien erfolgt danach in an sich bekannter Weise, z.B. durch Extrusion mittels eines Breitschlitzwerkzeuges gemäß der EP 0 185 863 B1.

Als Weichmacher eignen sich alle nach dem Stand der Technik bekannten Weichmacher, insbesondere Ester von mehrwertigen Säuren, mehrwertigen Alkoholen oder Oligoetherglykolen, wie z.B. Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester.

Als Weichmacher werden bevorzugt vor allem Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure verwendet. Das plastifizierte teilacetalisierte Polyvinylalkohol-Harz enthält vorzugsweise 25 bis 45 Gewichtsteile und bevorzugt 30 bis 40 Gewichtsteile Weichmacher, bezogen auf 100 Gewichtsteile Harz.

Die teilacetalisierten Polyvinylakohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden. Das bevorzugte Polyvinylbutyral-Harz enthält 10 bis 25 Gew.-%, vorzugsweise 17 bis 23 Gew.-% und besonders bevorzugt 19 bis 21 Gew.-% Vinylalkoholreste. Das Polyvinylbutyral enthält ggf. zusätzlich 0 bis 20 Gew.-%, bevorzugt 0,5 bis 2,5 Gew.-% Acetatreste.

Der Wassergehalt der Folien wird bevorzugt auf 0,15 bis 0,8 Gew.-%, insbesondere auf 0,2 bis 0,5 Gew.-% eingestellt.

Zur Herstellung von Verbundsicherheitsglas wird die erfindungsgemäße Folie beispielsweise zwischen gleich starke oder in der Dicke unterschiedliche Glasplatten gebracht und bei 40 bis 100°C zu einem Vorverbund gepreßt. Die Endverbund-Herstellung erfolgt z.B. in einem Autoklaven bei 120 bis 150°C und 8 bis 14 bar innerhalb einer Preßzeit von 10 bis 60 min., bevorzugt zwischen 20 und 40 min.

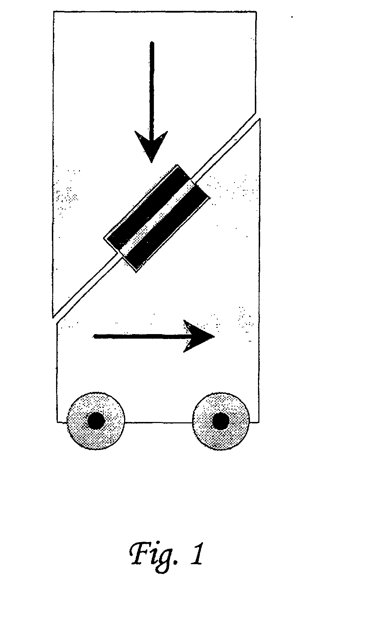

Zur Beurteilung der Haftung einer PVB-Folie am Mineralglas wird ein sogenannter Kompressionsschertest gemäß nachfolgender Beschreibung durchgeführt. Zur Herstellung der Prüfkörper wird die zu prüfende PVB-Klebefolie zwischen zwei ebene Silikatglasscheiben des Formats 300 mm x 300 mm mit einer Dicke von 4 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von 30 min. zu einem ebenen Verbundsicherheitsglas verpreßt. Aus dem so hergestellten Verbundsicherheitsglas werden 10 Proben mit den Maßen 25,4 mm x 25,4 mm geschnitten. Diese werden unter einem Winkel von 45° in eine zweiteilige, in Fig. 1 symbolisch dargestellte Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d. h. der zu prüfenden Verbundsicherheitsglasscheiben, kommt.

Die Prüfparameter sind wie folgt:

**Tabelle 1:**

| Prüfkörper: | quadratisch 25,4 mm x 25,4 mm |
|---|---|
| Verlegung: | untere Scheibe jeweils mit der Luft-bzw. Feuerseite zur Folie (Luft/Luft), oder obere und untere Scheibe jeweils mit der Zinnseite zur Folie (Bad/Bad) |
| Lagerung vor dem Ver-such: | 4h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm² oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint.

Bereits sehr kleine Mengen an amorphem Siliciumdioxid bewirken eine deutliche Erhöhung der Haftung zwischen der PVB-Folie und dem Glas. Bevorzugt wird eine solche Menge an amorphem Siliciumdioxid zugesetzt, die eine Erhöhung der Haftkraft, gemessen als mittlerer Kompressionsschertest-Wert, von mindestens 10 % bewirkt. Bevorzugt ist der absolute Wert des mittleren Kompressionsschertest-Wertes (Luft/Luft) > 4.000 [psi] (> 27,57 [N/mm²]) bzw. (Bad/Bad) > 3.000 [psi] (> 20,68 [N/mm²]).

### Beispiele zur Ausführung der Erfindung und Vergleichsbeispiele

Zu 100 Gewichtsteilen eines Polyvinylbutyral-Harzes mit einem Vinylalkohol-Restgehalt von 20,5 Gew.-% und einem Vinylacetat-Restgehalt von 0,7 Gew.-% wurden 32 Gewichtsteile von Triethylenglycol-bis-2-heptanoat als Weichmacher zusammen mit 0,15 Gewichtsteilen des UV-Absorbers Tinuvin® P (Hersteller: Fa. Ciba) gegeben. Die in den nachfolgenden Tabellen angegebenen Mengen an unterschiedlichen Sorten von amorphem SiO₂ wurden zuvor in dem Weichmacher dispergiert. Die Mischung wurde in einem Doppelschnecken-Extruder mit Breitschlitzdüse bei ca. 200°C Massetemperatur zu einem transparenten Film der Dicke 0,38 mm extrudiert. Der Feuchtegehalt betrug bei allen Proben 0,47 Gew.-%.

**Tabelle 2**

| Typ amorphes SiO₂ | SiO₂-Gehalt der Kiesel-säure [Gew.-%] | Menge in der Folien-masse [Gew.-%] | mittlerer - Kompressionsscher-test-Wert Luft/Luft [psi] | mittlerer - Kompressionsscher-test-Wert Bad/Bad [psi] |
|---|---|---|---|---|
| Sylobloc® 41 | 99,9 | 0,15 | 4900 | 3320 |
| Sylobloc® 47 | 99,9 | 0,15 | 5040 | 3290 |
| Sylobloc® 622 | ca. 50 | 0,15 | 4760 | 2930 |
| ohne | -- | -- | 3640 | 2210 |

Wie in den oben beschriebenen Beispielen wurde ein amorphes SiO₂ gemäß Tabelle 3 in unterschiedlichen Konzentrationen in die Folienmasse eingearbeitet und die aus den jeweiligen PVB-Folien erhaltenen Verbundsicherheitsgläser auf Haftung zum Mineralglas untersucht. Zum Vergleich wurde eine Folienmasse ohne Zusatz an amorphem SiO₂ hinzugezogen (Tabelle 3). Der Feuchtegehalt betrug bei allen Proben 0,47 Gew.-%.

**Tabelle 3**

| Typ amorphe Kieselsäure | Menge in der Folie [Gew.-%] | mittlerer Kompressionsschertest-Wert [psi] Luft/Luft | mittlerer Kompressionsschertest-Wert [psi] Bad/Bad |
|---|---|---|---|
| Sylobloc® 47 | 0,05 | 4820 | 2574 |
| Sylobloc® 47 | 0,10 | 4980 | 2950 |
| Sylobloc® 47 | 0,15 | 5040 | 3290 |
| Sylobloc® 47 | 0,25 | 4540 | 3300 |
| ohne | -- | 3640 | 2210 |

Bei einem Gehalt an amorpher Kieselsäure über 0,25 Gew.-% trat eine sichtbare Trübung im Verbundsicherheitsglas auf.

## Patentansprüche

1. Weichmacherhaltige Folie aus teilacetalisierten Polyvinylalkoholen als Zwischenschicht in Verbundsicherheitsgläsern, ***gekennzeichnet durch*** einen Zusatz von amorphem Siliciumdioxid in einer Menge von 0,001 bis 0,25 Gew.-%, bezogen auf die Masse der Folie.

2. Weichmacherhaltige Folie nach Anspruch 1, ***gekennzeichnet durch*** einen Gehalt an amorphem Siliciumdioxid von 0,01 bis 0,25 Gew.-%, bezogen auf die Masse der Folie.

3. Weichmacherhaltige Folie nach Anspruch 1, **dadurch gekennzeichnet, daß** als amorphes Siliciumdioxid pyrogene Kieselsäure eingesetzt wurde.

4. Verwendung einer weichmacherhaltigen Folie aus teilacetalisierten Polyvinylalkoholen mit einem Gehalt an amorphem Siliciumdioxid von 0,001 bis 0,25 Gew.-% als Zwischenschicht in Verbundsicherheitsgläsern.

5. Verwendung nach Anspruch 4, ***dadurch gekennzeichnet,* daß** das Verbundsicherheitsglas einen Kompressionsschertest-Wert (Luft/Luft) von > 4.000 [psi] (> 27,57 [N/mm²]) bzw. einen Kompressionsschertest-Wert (Bad/Bad) von > 3.000 [psi] (> 20,68 [N/mm²]) aufweist.

6. Verfahren zur Herstellung einer weichmacherhaltigen Folie aus teilacetalisierten Polyvinylalkoholen als Zwischenschicht in Verbundsicherheitsgläsern, ***gekennzeichnet durch*** den Zusatz von amorphem Siliciumdioxid in einer Menge von 0,001 bis 0,25 Gew.-%.

7. Verfahren zur Herstellung einer weichmacherhaltigen Folie aus teilacetalisierten Polyvinylalkoholen als Zwischenschicht in Verbundsicherheitsgläsern, ***gekennzeichnet durch*** den Zusatz von amorphem Siliciumdioxid in einer Menge, die eine Haftungserhöhung, gemessen als mittlerer Kompressionsschertest-Wert, von mehr als 10 % bewirkt.

8. Verfahren nach Anspruch 7 oder 8, **dadurch gekennzeichnet, daß** das Siliciumdioxid zunächst im Weichmacher dispergiert wird.

## Claims

1. Plasticized film composed of partially acetalized polyvinyl alcohols as intermediate layer in laminated safety glass, **characterized by** an addition of an amount of from 0.001 to 0.25% by weight of amorphous silicon dioxide, based on the weight of the film.

2. Plasticized film according to Claim 1, **characterized by** a content of from 0.01 to 0.25% by weight of amorphous silicon dioxide, based on the weight of the film.

3. Plasticized film according to Claim 1, **characterized in that** the amorphous silicon dioxide used comprised fumed silica.

4. Use, as intermediate layer in laminated safety glass, of a plasticized film composed of partially acetalized polyvinyl alcohols with a content of from 0.001 to 0.25% by weight of amorphous silicon dioxide.

5. Use according to Claim 4, **characterized in that** the laminated safety glass has a compression shear test value (air/air) of > 4,000 [psi] (> 27.57 [N/mm²]) and, respectively, a compression shear test value (bath/bath) of > 3,000 [psi] (> 20.68 [N/mm²]).

6. Process for producing a plasticized film composed of partially acetalized polyvinyl alcohols as intermediate layer in laminated safety glass, **characterized by** the addition of an amount of from 0.001 to 0.25% by weight of amorphous silicon dioxide.

7. Process for producing a plasticized film composed of partially acetalized polyvinyl alcohols as intermediate layer in laminated safety glass, **characterized by** the addition of that amount of amorphous silicon dioxide which brings about an adhesion increase of more than 10%, measured as average compression shear test value.

8. Process according to Claim 7 or 8, **characterized in that** the silicon dioxide is first dispersed in the plasticizer.

## Revendications

1. Feuille plastifiée constituée d'alcools polyvinyliques partiellement acétalisés en tant que couche intermédiaire dans des verres feuilletés composites, **caractérisée par** une addition de dioxyde de silicium amorphe en une quantité de 0,001 à 0,25% en poids, par rapport à la masse de la feuille.

2. Feuille plastifiée selon la revendication 1, **caractérisée par** une teneur en dioxyde de silicium amorphe de 0,01 à 0,25% en poids, par rapport à la masse de la feuille.

3. Feuille plastifiée selon la revendication 1, **caractérisée en ce que** l'on a mis en oeuvre comme dioxyde de silicium amorphe de l'acide silicique pyrogène.

4. Utilisation d'une feuille plastifiée constituée d'alcools polyvinyliques partiellement acétalisés présentant une teneur de 0,001 à 0,25% en poids de dioxyde de silicium amorphe, en tant que couche intermédiaire dans des verres feuilletés composites.

5. Utilisation selon la revendication 4, **caractérisée en ce que** le verre feuilleté composite présente une valeur à l'essai de compression/cisaillement (air/air) > 4.000 [psi] (> 27,57 [N/mm²]) ou une valeur à l'essai de compression/cisaillement (bain/bain) > 3.000 [psi] (> 20,68 [N/mm²]).

6. Procédé de production d'une feuille plastifiée constituée d'alcools polyvinyliques partiellement acétalisés en tant que couche intermédiaire dans des verres feuilletés composites, **caractérisé par** l'addition de dioxyde de silicium amorphe en une quantité de 0,001 à 0,25% en poids.

7. Procédé de production d'une feuille plastifiée constituée d'alcools polyvinyliques partiellement acétalisés en tant que couche intermédiaire dans des verres feuilletés composites, **caractérisé par** l'addition de dioxyde de silicium amorphe en une quantité réalisant une augmentation d'adhérence, mesurée comme valeur moyenne à l'essai de compression/cisaillement, de plus de 10%.

8. Procédé selon la revendication 7 ou 8, **caractérisé en ce que** le dioxyde de silicium est d'abord dispersé dans le plastifiant.
